# EUROPÄISCHE PATENTANMELDUNG

(11) **EP 0 706 908 A1**
(43) Veröffentlichungstag der Anmeldung: **17.04.1996**
(21) Anmeldenummer: 95106890.7
(22) Anmeldetag: 06.05.1995
(51) Int. Cl.: B60J 5/06

(54) **Vorrichtung zur rollbaren Aufhängung insbesondere von Seitenspannplanen von Lkw-Aufbauten**

(30) Priorität: 11.10.1994 DE 4436238
(71) Anmelder: Franz Miederhoff oHG, D-59846 Sundern (DE)
(72) Erfinder: Than, Johannes, D-59846 Sudern (DE)
(74) Vertreter: Patentanwälte Meinke, Dabringhaus und Partner

(57) **Zusammenfassung**

Mit einer Vorrichtung (1) zur rollbaren Aufhängung von Planen, wie Seitenspannplanen (2) von Lkw-Aufbauten, von Zeltplanen, von Schutzplanen für Schweißarbeitsstellen u. dgl., mit im Bereich der freien Oberkante an den Planen befestigten Laufrollenträgern (5) mit Laufrollen (4) zum Eingriff in nach unten offenen, im wesentlichen querschnittlich C-förmigen Laufschienen (6), soll eine Lösung geschaffen werden, mit der unter Beibehaltung einer robusten Bauweise eine Kostenreduzierung mit einfachen Mitteln möglich gemacht wird.

Dies wird dadurch erreicht, daß die Laufrolle (4) in dem Laufrollenträger (5) auswechselbar gelagert ist, wobei insbesondere die Laufrolle (4) als symmetrischer Rotationskörper mit einer mittleren, umlaufenden Führungsnut (7) ausgebildet ist, wobei der Laufrollenträger (5) einen in der Gebrauchslage die Führungsnut teilweise übergreifenden Bügel (5b) aufweist.

## Beschreibung

Die Erfindung richtet sich auf eine Vorrichtung zur rollbaren Aufhängung von Planen, wie Seitenspannplanen von Lkw-Aufbauten, von Zeltplanen, von Schutzplanen für Schweißarbeitsstellen u. dgl., mit im Bereich der freien Oberkante an den Planen befestigten Laufrollenträgern mit Laufrollen zum Eingriff in nach unten offenen, im wesentlichen querschnittlich C-förmigen Laufschienen.

Es ist bekannt, vergleichsweise schwere Planen, anders als etwa Vorhänge für den Wohnbereich, mit Laufrollen zu versehen, die vergleichsweise robust ausgebildet sein müssen, um die schweren Planen zu halten, wobei gleichzeitig eine gute Rollfähigkeit gewährleistet sein muß.

So ist es bekannt, in dem Bereich der freien Oberkante der Planen mit Laufrollen versehene Metallaschen durch Vernieten oder Verschrauben zu befestigen. Handelt es sich um Metallaufrollen können diese kugelgelagert sein, die Metallträgerplatten werden vielfach vernietet. Bei etwas leichteren Konstruktionen bestehen sowohl die Trägerplatten wie auch die Laufrollen aus Kunststoff. Eine andere Lösung besteht darin, Haken an den freien Oberkanten der Planen zu vernieten, in die dann Rollenträger mit Rollen eingehängt werden.

Gerade bei schweren Planen mit entsprechend vergleichsweise aufwendigen Rollenkonstruktionen besteht ein Nachteil darin, daß bei Rollenbruch oder einer anderen Beschädigung ein einfaches Auswechseln nicht möglich ist. So benötigt beispielsweise der Fahrer eines entsprechend ausgerüsteten Fahrzeuges spezielle Werkzeuge, um den gesamten Rollenkörper, d.h. die Laufrolle mit dem Laufrollenträger, auswechseln zu können. Ohne Spezialwerkzeuge oder wenn die Elemente angenietet sind, muß eine Fachwerkstatt aufgesucht werden, wodurch alleine durch die Stillstandszeiten und die entsprechenden Arbeiten vergleichsweise hohe Kosten anfallen.

Aufgabe der Erfindung ist die Schaffung einer Lösung, mit der unter Beibehaltung einer robusten Bauweise eine Kostenreduzierung mit einfachen Mitteln möglich gemacht wird.

Mit einer Vorrichtung der eingangs bezeichneten Art wird diese Aufgabe gemäß der Erfindung dadurch gelöst, daß die Laufrolle in dem Laufrollenträger auswechselbar gelagert ist.

Dadurch, daß der Laufrollenträger auch bei Laufrollenbruch, etwa durch übermäßige Reibung oder Überlastung hervorgerufen, nicht ausgewechselt werden muß und daß die Laufrolle für sich gesehen auswechselbar ist, ohne daß es zusätzlicher Handhabungen bedarf, insbesondere muß kein Spezialwerkzeug herangezogen werden, können die Kosten erheblich gesenkt werden.

Eine konstruktiv einfache Lösung dieser Auswechselbarkeit besteht darin, daß die Laufrolle als symmetrischer Rotationskörper mit einer mittleren, umlaufenden Führungsnut ausgebildet ist, wobei der Laufrollenträger einen in der Gebrauchslage die Führungsnut teilweise übergreifenden Bügel aufweist.

Dadurch, daß der Laufrollenträger einen den mittleren Bereich der Laufrolle übergreifenden Bügel aufweist, muß die Laufrolle nur relativ zu diesem Bügel seitlich ausgeklinkt werden, um ausgewechselt werden zu können.

Eine sehr stark belastbare Konstruktion besteht, unter Beibehaltung der oben schon genannten Vorteile, nach der Erfindung darin, daß der Laufrollenträger in der Seitenansicht mit einer etwa dreieckigen, das Durchstecken der Laufrolle ermöglichenden Ausnehmung ausgebildet ist, wobei eine Spitze der Ausnehmung als der Nut der Laufrolle angepaßter Kurvenzug ausgebildet ist.

Mit der Erfindung wird auch erreicht, daß durch die Symmetrie der Konstruktion ein seitliches Verdrehen der Laufrollen und damit auch eine Beschädigung der Laufschienen vermeidbar ist.

Darüber hinaus sieht die Erfindung vor, daß der Laufrollenträger mit einer Durchtrittsöffnung für einen Verstärkungs- und/oder Spanngurt an der Plane ausgerüstet ist, wobei insbesondere auch vorgesehen sein kann, daß der Laufrollenträger mit Durchgangsbohrungen für Befestigungsnieten zur Befestigung des Gurtes ausgerüstet ist.

Durch diese Gestaltung des Laufrollenträgers ergibt sich eine vollständige Zugentlastung an der Vernietung des Verstärkungsgurtes bzw. Spanngurtes, der bei Seitenspannplanen über entsprechende Spannelemente im unteren Aufbaubereich gegen die Laufschiene bzw. Laufrolle verspannt wird.

Dabei ist es besonders zweckmäßig, wenn, wie dies die Erfindung ebenfalls vorsieht, die Basis der dreieckigen Ausnehmung im Laufrollenträger der Breite des Gurtes entspricht. Damit ist es möglich, den Spann- bzw. Verstärkungsgurt bei der Vernietung des Laufrollenträgers um den durch die Laufrollenausnehmung und die Durchsteckausnehmung gebildeten Steg zu legen, Spannkräfte werden daher allein durch die Umlenkung des Gurtes aufgenommen, die Vernietung ist damit frei von Scherbelastungen.

Ein weiterer Vorteil der Erfindung besteht darin, daß die Laufrollen nicht an eine bestimmte geometrische Gestaltung gebunden sind. Hier können bei gleichem Laufrollenträger unterschiedliche Rollenformen eingesetzt werden, d.h. der benutzende Kunde kann die Laufrollen an die beispielsweise an seinem Lastkraftwagen vorhandenen Laufschienen problemlos anpassen. Dies ist dadurch zu erreichen, daß beispielsweise die beidseitig der Nut vorgesehenen Laufrollenbereiche zylindrisch oder etwa kugelabschnittförmig ausgebildet sind.

Besonders zweckmäßig ist es, wenn die Laufrollen als Kunststoffrotationskörper, insbesondere aus Polyamid, ausgebildet sind, wobei hier auch andere, ähnliche Eigenschaften aufweisende Kunststoffe in Frage kommen.

Die Erfindung ist nachstehend anhand der Zeichnung beispielsweise näher erläutert. Diese zeigt in
- Fig. 1: eine Seitenansicht auf die erfindungsgemäße Vorrichtung,
- Fig. 2: einen Schnitt etwa nach Linie II-II in Fig. 1 sowie in
- Fig. 3: die Seitenansicht einer alternativen Laufrolle.

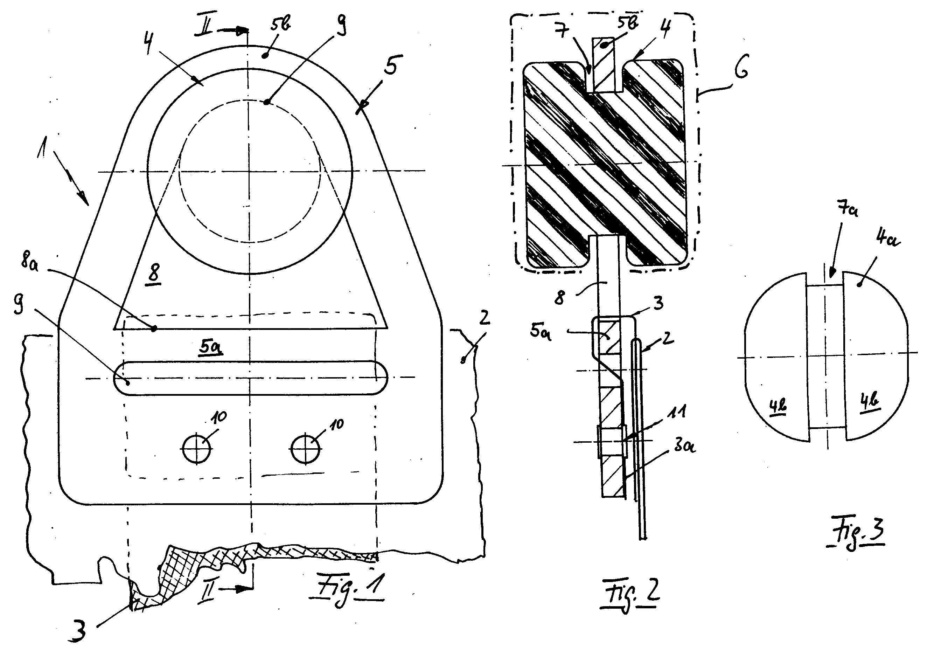

Die allgemein mit 1 bezeichnete Vorrichtung dient zur Rollbahnaufhängung einer mit 2 bezeichneten Seitenspannplane eines Lastkraftwagens, die in Fig. 1 nur andeutungsweise wiedergegeben ist. Die Seitenwandspannplane ist in periodischen Abständen, die in der Regel dem Laufrollenabstand entsprechen, mit Spanngurten 3 ausgerüstet, die wiederum in den Figuren nur angedeutet, teilweise gestrichelt dargestellt sind.

Die jeweilige Laufrolle läuft in einer am Lkw befestigten, in Fig. 2 nur strichpunktiert angedeuteten und im wesentlichen querschnittlich C-förmigen Laufschiene 6 ab, rollt in einen Laufrollenträger 5, der sich in einer zentrischen, umlaufenden Führungsnut 7 abstützt, wie sich dies beispielsweise aus Fig. 2 ergibt.

Um diese Abstützung des Laufrollenträgers 5 an der Laufrolle 4 bzw. in der zentrischen Nut 7 zu ermöglichen, weist der Laufrollenträger 5 eine etwa dreieckförmige Ausnehmung 8 auf, die in ihrem nach oben weisenden Endbereich einen Bügel 5b mit einer Laufkurve 9 aufweist, die der Krümmung der Führungsnut 7 entspricht.

Um das Auswechseln der Laufrolle 4 zu ermöglichen, ist das freie Maß der Ausnehmung 8 an seiner größten Stelle dem Außendurchmesser der jeweiligen Laufrolle angepaßt, wobei ggf. beim Auswechseln ein leichtes Verkanten der Laufrolle notwendig ist, auch abhängig von der Packungslage des Gurtes 3 im Montagezustand.

Die Ausnehmung 8 des Laufrollenträgers weist dem Bügelbereich 5b gegenüber eine Basis, mit 8a bezeichnet, auf, die etwas größer ist als die Breite des Gurtes 3, sowie eine dazu parallele Durchsteckausnehmung 9 für das freie Ende des Gurtes 3 sowie zwei Nietbohrungen 10, um das freie Ende 3a mit Nieten 11 (Fig. 2) am Laufrollenträger 5 befestigen zu können.

Erkennbar umschlingt der Gurt 3, wie sich aus Fig. 2 ergibt, den so entstandenen Zwischensteg 5a am Laufrollenträger 5, so daß die Nietverbindung 11 entlastet ist.

Alternativ zu der in den Fig. 1 und 2 dargestellten Form der Laufrolle 4 ist in Fig. 3 ein abgewandeltes Ausführungsbeispiel einer entsprechenden Laufrolle 4a gezeigt, die etwa kugelabschnittförmige Laufbereiche 4b beidseitig der Führungsnut 7a aufweist, wobei diese Laufbereiche einer entsprechend geformten Laufschiene angepaßt sind.

Erkennbar kann der Benutzer der Vorrichtung 1 je nach Gestaltung der Laufschiene unterschiedliche Laufrollen 4 am Laufrollenträger 5 mittels der Öffnung 8 einklinken.

## Patentansprüche

1. Vorrichtung (1) zur rollbaren Aufhängung von Planen, wie Seitenspannplanen (2) von Lkw-Aufbauten, von Zeltplanen, von Schutzplanen für Schweißarbeitsstellen u. dgl., mit im Bereich der freien Oberkante an den Planen befestigten Laufrollenträgern (5) mit Laufrollen (4) zum Eingriff in nach unten offenen, im wesentlichen querschnittlich C-förmigen Laufschienen (6),
dadurch gekennzeichnet,
daß die Laufrolle (4) in dem Laufrollenträger (5) auswechselbar gelagert ist.

2. Vorrichtung nach Anspruch 1,
dadurch gekennzeichnet,
daß die Laufrolle (4) als symmetrischer Rotationskörper mit einer mittleren, umlaufenden Führungsnut (7) ausgebildet ist, wobei der Laufrollenträger (5) einen in der Gebrauchslage die Führungsnut teilweise übergreifenden Bügel (5b) aufweist.

3. Vorrichtung nach Anspruch 1 oder 2,
dadurch gekennzeichnet,
daß der Laufrollenträger (5) in der Seitenansicht mit einer etwa dreieckigen, das Durchstecken der Laufrolle (4) ermöglichenden Ausnehmung (8) ausgebildet ist, wobei eine Spitze der Ausnehmung (8) als der Nut (7) der Laufrolle (4) angepaßter Kurvenzug (9) ausgebildet ist.

4. Vorrichtung nach einem der vorangehenden Ansprüche,
dadurch gekennzeichnet,
daß der Laufrollenträger (5) mit einer Durchtrittsöffnung (9) für einen Verstärkungs- und/oder Spanngurt (3) an der Plane (2) ausgerüstet ist.

5. Vorrichtung nach einem der vorangehenden Ansprüche,
dadurch gekennzeichnet,
daß der Laufrollenträger (5) mit Durchgangsbohrungen (10) für Befestigungsnieten (11) zur Befestigung des Gurtes (3) ausgerüstet ist.

6. Vorrichtung nach einem der vorangehenden Ansprüche,
dadurch gekennzeichnet,
daß die Basis (8a) der dreieckigen Ausnehmung (8) im Laufrollenträger (5) der Breite des Gurtes (3) entspricht.

7. Vorrichtung nach einem der vorhergehenden Ansprüche,
dadurch gekennzeichnet,
daß die beidseitig der Nut (7) vorgesehenen Laufrollenbereiche zylindrisch oder etwa kugelabschnittförmig ausgebildet sind.

8. Vorrichtung nach einem der vorhergehenden Ansprüche,
dadurch gekennzeichnet,
daß die Laufrolle (4) als Kunststoffrotationskörper, insbesondere aus Polyamid, ausgebildet ist.
